# EUROPEAN PATENT APPLICATION

(11) **EP 2 928 069 A2**
(43) Date of publication of application: **07.10.2015**
(21) Application number: 15156683.3
(22) Date of filing: 26.02.2015
(51) Int. Cl.: H02P 9/48, H02K 7/14

(54) **Systems utilizing a controllable voltage AC generator system**

(30) Priority: 02.04.2014 US 201414243219
(71) Applicant: Hamilton Sundstrand Corporation, Charlotte, NC 28217 (US)
(72) Inventor: Himmelmann, Richard A., Beloit, WI Wisconsin 53511 (US)
(74) Representative: Hughes, Andrea Michelle

(57) **Abstract**

An electrical system (100) for a motorized system can include a controllable voltage AC generator (103) configured to be connected to a power generation unit shaft (102) and configured to convert rotational energy to electrical energy, wherein the controllable voltage AC generator (103) is configured to output a desired voltage irrespective of a change in a rotational speed of the controllable voltage AC generator (103), and an AC bus (107) operative to connect the controllable voltage AC generator (103) to an AC electrical device.

## Description

### BACKGROUND

### 1. Field

The present disclosure relates to systems using electric motors, more specifically to AC electric motor fans used in vehicles.

### 2. Description of Related Art

Tracked vehicles (e.g., tanks) utilizes a multi-ratio gearbox to couple the prime mover to the vehicle tracks, and a hydraulic coupling system to drive a gear assembly, which is connected to a drive shaft that provides power to an angle gearbox on the cooling fan assembly. This mechanical drive train is used to provide variable speed operation for the vehicle cooling system fan. Such a complicated mechanical arrangement is constructed to allow the vehicle to save energy by allowing the cooling fan to run at less than its maximum speed when a cooling system does not demand full air flow.

Recently, engineers have started to design hybrid electric power transmission systems for many types of vehicles. Some designs utilize an additional inverter, coupled with an electric motor to drive the vehicle's cooling fan. This type of cooling fan architecture allowed the designers to place the fan in a location that wasn't parallel to the engine pulley, and it allows the cooling fan to be run at a speed which is most energy efficient for the vehicle's specific thermal management needs. However, these designs require large and expensive power electronics components.

Such conventional methods and systems have generally been considered satisfactory for their intended purpose. However, there is still a need in the art for a system that allows for the efficient use of electric motors in a vehicle. The present disclosure provides a solution for this problem.

### SUMMARY

A system includes a controllable voltage AC generator that is configured to be connected to convert rotational energy to electrical energy (e.g., powered by a power generation unit shaft). The controllable voltage AC generator is configured to output a desired voltage irrespective of a change in a rotational speed of the controllable voltage AC generator. The system can also include an AC electric motor fan configured to cool a power generation unit. An AC electric bus can be configured to connect the controllable voltage AC generator to the AC electric motor fan for driving the motor.

In some embodiments, the system can further include a power generation unit operatively connected to the controllable voltage AC generator and configured to convert energy of a fuel to rotational energy of a power generation unit shaft.

The system can further include a controller configured to control the controllable voltage AC generator to output the desired voltage. The controller can have a feedback system for determining at least one of a speed of the AC electric motor fan, a torque of the AC electric motor fan, an operational setting of the power generation unit, or a temperature of the power generation unit, and is operative to modify the voltage of the controllable voltage AC generator to achieve at least one of a desired motor speed, a desired torque, a desired setting for an operative condition, or a desired temperature of the power generation unit.

In at least one aspect of this disclosure, a method includes controlling an output voltage of a controllable voltage generator attached to a power generation unit of a vehicle that is configured to convert energy of a fuel to rotational energy of a power generation unit shaft and allowing the controlled output voltage to power an AC electric motor fan disposed in the vehicle. The AC electric motor fan can be any suitable electric motor (e.g., an induction motor and/or any other suitable electric motor that is configured to tolerate slip).

The method can further include determining at least one of a speed of the AC electric motor fan, a torque of the AC electric motor fan, an operational setting of the power generation unit, or a temperature of the power generation unit. In some embodiments, the method further includes modifying the voltage of the controllable voltage AC generator to achieve at least one of a desired motor speed, a desired torque, a desired setting for an operative condition, or a desired temperature of the power generation unit.

The method can further include increasing the output voltage if at least one of the speed of the AC electric motor fan or the torque of the AC electric motor fan is determined to be below a desired value, or the temperature of the power generation unit is determined to be above a threshold temperature.

The method can further include decreasing the output voltage if at least one of the speed of the AC electric motor fan or the torque of the AC electric motor fan is determined to be above a desired value, or the temperature of the power generation unit is determined to be below a threshold temperature. The method can further include actuating the controllable voltage AC generator to produce a constant voltage in response to a change in power generation unit shaft speed.

In some embodiments, the method can further include controlling multiple AC electric motor fans. The method can further include controlling the speed of the AC electric motor fan of the vehicle independently of the speed of the power generation unit shaft.

In at least one aspect of this disclosure, an electrical system for a motorized system includes a controllable voltage AC generator configured to be connected to a power generation unit shaft and configured to convert rotational energy to electrical energy, wherein the controllable voltage AC generator is configured to output a desired voltage irrespective of a change in a rotational speed of the controllable voltage AC generator, and an AC bus operative to connect the controllable voltage AC generator to an AC electrical device.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described by way of example only and in detail herein below with reference to certain figures, wherein:
Fig. 1 is a partial, perspective schematic view of an embodiment of a system in accordance with this disclosure; and
Fig. 2 is a schematic view of an embodiment of a system in accordance with this disclosure.

### DETAILED DESCRIPTION

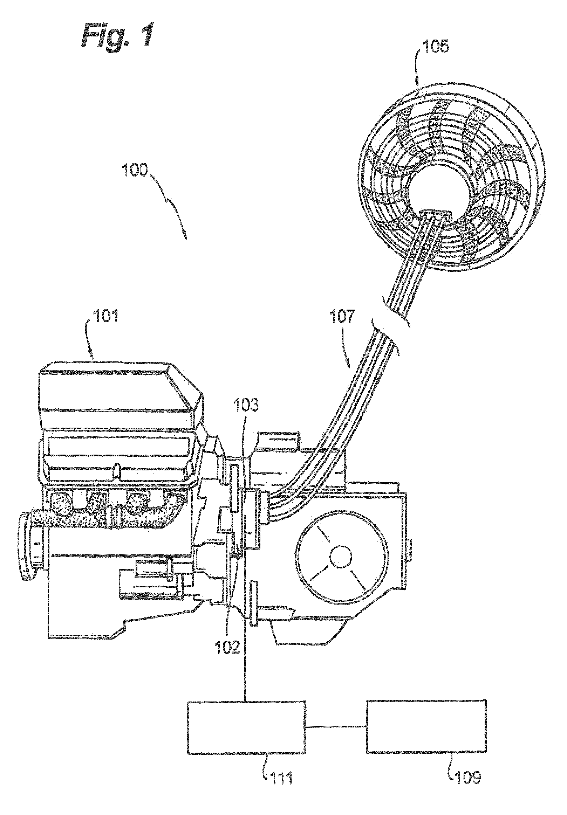

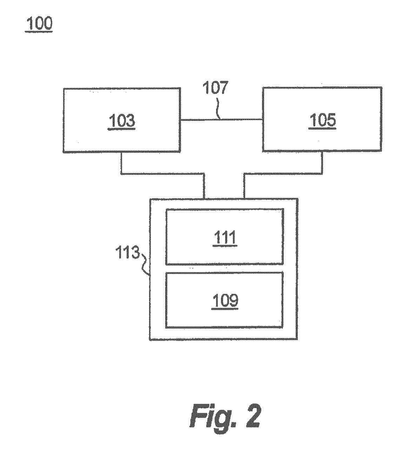

Reference will now be made to the drawings wherein like reference numerals identify similar structural features or aspects of the subject disclosure. For purposes of explanation and illustration, and not limitation, an exemplary embodiment of a system 100 in accordance with the disclosure is shown in Fig. 1. A systematic view of a system 100 is shown in Fig. 2. The systems and methods disclosed herein can be used to power and/or control cooling fans and/or other AC powered electronics, or for any other suitable purpose.

Referring to Figs. 1 and 2, in at least one aspect of this disclosure, a system 100 includes a controllable voltage AC generator 103 that is configured to be connected to a power generation unit shaft 102 of a power generation unit 101 (e.g., a diesel piston engine or other vehicle power plant) and is configured to convert rotational energy to electrical energy. The controllable voltage AC generator 103 can be any suitable controllable voltage generator configured to modify output voltage for a given rotation speed of the controllable voltage generator 103. For example, U.S. Patent No. 7,385,332 to Himmelmann discloses a suitable type of controllable voltage AC generator.

Non-limiting examples of a controllable voltage AC generator include: 1) a wound field machine that can have its excitation current (applied to the main stage rotor) increased or reduced to vary the amount of magnetic flux interacting with the main stage stator; 2) An induction generator that can increase or decrease the frequency of the excitation field (thereby changing the slip rate), which then changes the magnetic flux on the rotor, thereby changing the main stage output voltage; 3) a permanent magnet machine that can have the rotor axially displaced out of the stator thereby changing the effective stack length of the machine, which changes the amount of rotor flux reacting with the stator, thereby altering the output voltage; 4) a permanent magnet machine that can have a metal sleeve partially or fully inserted between the rotor and the stator (a magnetic shutter) effectively short circuiting the magnetic flux on the rotor, thereby changing how much flux interacts with the stator, thereby altering the machine output voltage; 5) a permanent magnet machine that can have a two piece rotor, axially split such that one half of the rotor can be rotated relative to the other, thereby cancelling out some of the magnetic flux interacting with the stator, thereby altering the output voltage; and 6) a permanent magnet machine that can incorporate control windings in the stator that can cause saturation, or can re-direct the magnetic flux away from the main stator coils, thereby changing the main stator output voltage.

The system 100 can further include at least one power generation unit 101 configured to convert energy of a fuel to rotational energy of a power generation unit shaft 102 via reciprocation. While the power generation unit 101 is described herein as piston/reciprocating engine, it is contemplated that this generator 103 could be configured to operate with any other suitable power plant (e.g., a turbomachine). The power generation unit 101 can also be connected to a drive train of the vehicle configured to move the vehicle (e.g., one or more wheels of car, tracks of a tank, or the like).

The controllable voltage AC generator 103 can be configured to output a desired voltage irrespective of any change in rotational speed of the power generation unit shaft 102. In this respect, the generator 103 can output a desired voltage even if the speed of the power generation unit 101 changes due to fluctuating throttle setting, fuel flow, mixture, and/or other reasons. The desired voltage can be raised or lowered independent of the speed of the power generation unit 101.

The system 100 can further include at least one AC electric motor fan 105 configured to cool the power generation unit 101 of the vehicle 300, and an AC bus 107 connecting the controllable voltage AC generator to each of the AC electric motor fans 105. The electric motor 105 can be any suitable electric motor configured to operate with alternating current (e.g., an induction motor and/or any other suitable electric motor configured to tolerate slip). The AC bus 107 can be any suitable connection to power the AC electric motor fan 105 (e.g., a three phase connection). The speed of the AC electric motor fan 105 can be monitored and/or limited by a suitable control system (e.g., cooling system controller 109) that is operatively connected to the AC electric motor fan 105, the power generation unit 101, and/or one or more sensors (e.g., configured to sense at least one of a temperature of the power generation unit 101, a speed of the power generation unit 101, a speed of the AC electric unit fan 105) disposed within the system 100 via any suitable circuitry, hardware, and/or software.

The system 100 can further include a generator controller 111 configured to control the controllable voltage AC generator 103 to output the desired voltage. The generator controller 111 can have any suitable feedback system and/or be configured to communicate with the cooling system controller 109 and/or the AC electric motor fan 105 such that the generator controller can determine a state and/or temperature of the power generation unit 101 and/or the AC electric motor fan 105 to determine if an increase or decrease in voltage is desired.

The generator controller 111 can be operative to modify the voltage output of the controllable voltage AC generator to achieve at least one of a desired motor speed, a desired torque, a desired setting for an operative condition, and/or a desired temperature of the power generation unit, or any other suitable setting.

The generator controller 111 can be configured to modify the output voltage in accordance with a predetermined algorithm implemented via any suitable circuitry, hardware, or software, or via any other suitable program. For example, if the generator controller 111 or cooling system controller 109 determines that at least one of a desired motor speed, a desired torque of AC electric motor fan 105, or a desired setting for an operative condition is insufficient, and/or a desired temperature of the power generation unit 101 is above a threshold value, then the generator controller 111 can modify the controllable voltage AC generator 103 to output a higher voltage, and vice versa.

The generator controller 111 can also be connected to the power generation unit 101 to determine a change in rotational speed of the power generation unit 101 such that the generator controller 111 can modify the output voltage setting of the generator 103 to maintain a constant/desired voltage output and/or anticipate the fluctuations of the power generation unit 101.

Referring to Fig. 2, a master controller 113 can be included in system 100 such that the master controller 113 includes both the cooling system controller 109 and the generator controller 111 implemented as software modules or the like. Alternatively, the cooling system controller 109 and the generator controller 111 can be independent of each other in any suitable manner. While an AC electric motor fan 105 is not shown connected in Fig. 2, one or more AC electric motor fans 105 can be connected to the master controller 113 or any other suitable controller as disclosed herein in any suitable manner.

Each controllable voltage generator 103 can be coaxially disposed on the power generation unit shaft 102 or in any other suitable manner. For example, one or more generators 103 could also be connected to the power generation unit 101 via a gearbox, chains, belts, friction drives, or the like.

In at least one aspect of this disclosure, a method includes controlling an output voltage of a controllable voltage generator 103 attached to a power generation unit 101 of a vehicle (e.g., a truck, a tank, an aircraft, or any other suitable vehicle) that is configured to convert energy of a fuel to rotational energy of a power generation unit shaft 102 and allowing the controlled voltage to power an AC electric motor fan 105 disposed in the vehicle. The AC electric motor fan 105 can be any suitable electric motor (e.g., an induction motor and/or any other suitable electric motor that is configured to tolerate slip).

The method can further include determining a state and/or temperature of the power generation unit 101 and/or the AC electric motor fan 105. In some embodiments, the method further includes modifying the voltage of the controllable voltage AC generator 103 to achieve at least one of a desired motor speed, a desired torque of AC electric motor fan 105, a desired setting for an operative condition, or a desired temperature of the power generation unit 101.

The method can include increasing the output voltage to increase cooling if the temperature of the power generation unit 101 is determined to be above a threshold value so as to increase the fan speed. The method can include decreasing the output voltage if the temperature is determined to be below a threshold value so as to decrease the fan speed. The method can include actuating the controllable voltage AC generator 103 to produce a constant voltage in response to a change in power generation unit shaft speed. The method can further include controlling the speed of the AC electric motor fan 105 of the vehicle 300 independently of the speed of the power generation unit 102.

In some embodiments, the generator 103 can be configured to allow inclusion of a suitable active and/or passive rectifier that can siphon some of the electric power from the electric motor fan system, allowing it to be used to power other pieces of equipment on the vehicle.

By utilizing the embodiments disclosed here, an electrically powered cooling fan can be included on a suitable vehicle without complex and/or heavy electronics for converting or inverting electrical signals. This allows the fan to be operated at its most efficient speed/torque at all times instead of at its maximum speed. This can result in considerable reduction in the weight and cost of the existing systems and provide an overall efficiency increase.

Embodiments of methods and systems of the present disclosure, as described above and shown in the drawings, provide for vehicular systems with superior properties including a lightweight and efficient cooling system. While the apparatus and methods of the subject disclosure have been shown and described with reference to embodiments, those skilled in the art will readily appreciate that changes and/or modifications may be made thereto without departing from the scope of the subject disclosure.

## Claims

1. A system (100), comprising:
a controllable voltage AC generator (103) configured to be connected to a power generation unit shaft (102) and configured to convert rotational energy to electrical energy, wherein the controllable voltage AC generator (103) is configured to output a desired voltage irrespective of a change in a rotational speed of the controllable voltage AC generator (103);
an AC electric motor fan (105); and
an AC bus (107) connecting the controllable voltage AC generator (103) to the AC electric motor fan (105).

2. The system (100) of claim 1, further comprising a controller (111) configured to control the controllable voltage AC generator (103) to output the desired voltage.

3. The system (100) of claim 2, wherein the controller (111) includes a feedback system for determining at least one of a speed of the AC electric motor fan (105), a torque of the AC electric motor fan (105), an operational setting of the power generation unit (101), or a temperature of the power generation unit (101), and is operative to modify the voltage of the controllable voltage AC generator to achieve at least one of a desired motor speed, a desired torque, a desired setting for an operative condition, or a desired temperature of the power generation unit.

4. The system (100) of claim 1, further comprising a power generation unit (101) operatively connected to the controllable voltage AC generator and configured to convert energy of a fuel to a rotational energy of a power generation unit shaft (102).

5. A method, comprising:
controlling an output voltage of a controllable voltage generator (103) attached to a power generation unit (101) of a vehicle that is configured to convert energy of a fuel to rotational energy of a power generation unit shaft (102); and
allowing the controlled voltage to power an AC electric motor fan (105) disposed on the vehicle.

6. The method of claim 5, further comprising determining at least one of a speed of the AC electric motor fan (105), a torque of the AC electric motor fan (105), an operational setting of the power generation unit (101), or a temperature of the power generation unit (101).

7. The method of claim 6, further comprising, modifying the voltage of the controllable voltage AC generator (103) to achieve at least one of a desired motor speed, a desired torque, a desired setting for an operative condition, or a desired temperature of the power generation unit (101).

8. The method of claim 6, further comprising increasing the output voltage if at least one of the speed of the AC electric motor fan (105) or the torque of the AC electric motor fan (105) is determined to be below a desired value, or the temperature of the power generation unit (101) is determined to be above a threshold temperature.

9. The method of claim 6, further comprising decreasing the output voltage if at least one of the speed of the AC electric motor fan (105) or the torque of the AC electric motor fan (105) is determined to be above a desired value, or the temperature of the power generation unit (101) is determined to be below a threshold temperature.

10. The method of claim 5, further comprising actuating the controllable voltage AC generator (103) to produce a constant voltage in response to a change in power generation unit shaft (102) speed.

11. The method of claim 5, further comprising controlling multiple AC electric motor fans (105) of the vehicle.

12. The method of claim 5, further comprising controlling the speed of the AC electric motor fan (105) of the vehicle independently of the speed of the power generation unit shaft (102).

13. An electrical system (100) for a motorized system, comprising:
a controllable voltage AC generator (103) configured to be connected to a power generation unit shaft (102) and configured to convert rotational energy to electrical energy, wherein the controllable voltage AC generator (103) is configured to output a desired voltage irrespective of a change in a rotational speed of the controllable voltage AC generator (103); and
an AC bus (107) operative to connect the controllable voltage AC generator (103) to an AC electrical device.
